# EUROPÄISCHE PATENTSCHRIFT

(11) **EP 3 439 923 B1**
(45) Veröffentlichungstag und Bekanntmachung des Hinweises auf die Patenterteilung: **19.02.2020**
(21) Anmeldenummer: 17707233.7
(22) Anmeldetag: 22.02.2017
(51) Int. Cl.: B60R 21/0132, G08B 25/00, G08B 25/01, G08B 25/10

(54) **VERFAHREN ZUR BESTIMMUNG EINER AUFPRALLSTÄRKE**
METHOD FOR DETERMINING AN IMPACT INTENSITY
PROCÉDÉ DE DÉTERMINATION D'UNE INTENSITÉ D'UN IMPACT

(30) Priorität: 04.04.2016 DE 102016205545
(43) Veröffentlichungstag der Anmeldung: 13.02.2019
(73) Patentinhaber: Robert Bosch GmbH, 70442 Stuttgart (DE)
(72) Erfinder: LADDA, Josefine, 71642 Ludwigsburg (DE); SCHUSTER, Stefan, 73732 Esslingen (DE); FAISST, Hans-Joerg, 72138 Kirchentellinsfurt (DE); LEHR, Elvira, Northville Township 48168 (US); OHL, Christian, 72793 Pfullingen (DE); ROELLEKE, Michael, 71229 Leonberg-Hoefingen (DE); GROSS, Marcus, Farmington Hills 48331-3418 (US)
(86) Internationale Anmeldenummer: PCT/EP2017/054095
(87) Internationale Veröffentlichungsnummer: WO 2017/174256

(56) Entgegenhaltungen:
- WO-A1-2014/177891
- WO-A2-2014/094743
- DE-A1-102008 018 868
- DE-A1-102014 217 156
- JP-A- 2012 234 241
- US-A- 5 969 598
- US-B2- 7 119 669
- US-B2- 9 142 128

## Beschreibung

### Stand der Technik

Die Erfindung betrifft ein Verfahren zur Bestimmung einer Aufprallstärke.

Aus dem Stand der Technik sind unterschiedliche Verfahren zur Crasherkennung bekannt. Hierbei werden eindimensionale Beschleunigungswerte empfangen und ausgewertet. Bei einem Überschreiten von festgelegten Schwellenwerten können passive Rückhaltemittel angesteuert werden.

Die US 9 142 128 B2 beschreibt beispielsweise ein System, bei welchem eine Unfallerkennung anhand von Messwerten eines Triaxial-Sensors erfolgt.

### Offenbarung der Erfindung

Die Erfindung beschreibt ein Verfahren zur Erzeugung eines eine Aufprallstärke repräsentierenden Signals mit den Schritten:
- Empfangen von wenigstens drei Signalen, welche jeweils Beschleunigungen in unterschiedliche Raumrichtungen repräsentieren;
- Berechnen einer richtungsunabhängigen Größe aus den drei Signalen;
- Ermitteln eines Integralwertes der richtungsunabhängigen Größe über ein Zeitfenster;
- Erzeugung eines eine Aufprallstärke repräsentierenden Signals anhand des ermittelten Integralwertes.

Dieses Verfahren kann vorteilhafterweise in einem Fahrzeug zur Detektion eines Unfalls durchgeführt werden.

Der Vorteil des Verfahrens besteht darin, dass eine Aufprallstärke unabhängig von der Beschleunigungsrichtung bestimmbar ist. Die drei Signale repräsentieren Beschleunigungen in unterschiedliche Raumrichtungen, wobei mittels der Raumrichtungen einen dreidimensionaler Raum abgedeckt wird. Im einfachsten Fall stehen die Raumrichtungen repräsentierende Vektoren jeweils paarweise senkrecht aufeinander. Bei der Ermittlung der richtungsunabhängigen Größe aus den drei Signalen, wird ein richtungsunabhängiger Skalar gebildet. Unter der Aufprallstärke wird die Stärke eines Aufpralls verstanden. In dieser Erfindung wird unter Aufprallstärke insbesondere die Aufprallstärke auf ein Fahrzeug verstanden, beispielsweise durch ein Hindernis, ein weiteres Fahrzeug, einen Fußgänger, einen Einkaufswagen oder ein Sportgerät, wie einen Baseballschläger.

Wird das Verfahren beispielsweise in einer Vorrichtung durchgeführt, die in der Lage ist, drei Beschleunigungen in unterschiedlichen Raumrichtungen zu erfassen, so wird mittels des Verfahrens eine Aufprallstärke ermittelt unabhängig von der Einbauposition und Einbauausrichtung des Beschleunigungssensors. Die Ausrichtung der Vorrichtung bzw. der Raumrichtungen oder Messrichtungen kann auch im Betrieb verändert werden. Hierdurch kann ein anwenderfreundliches und fehlerunanfälliges Produkt geschaffen werden.

Gemäß der Erfindung erfolgt eine Anpassung der richtungsunabhängigen Größe durch eine Subtraktion eines die Erdbeschleunigung repräsentierenden Wertes von der richtungsunabhängigen Größe.

Diese Ausführungsform bietet den Vorteil, dass eine sehr einfache Berücksichtigung der Erdbeschleunigung durchführbar ist und keine zu hohen Aufprallstärken aufgrund der Erdbeschleunigung ermittelt werden. Die Erdbeschleunigung wird in dieser Ausführungsform richtungsunabhängig subtrahiert, entspricht also ebenfalls einem Skalar.

In einer vorteilhaften Ausführungsform der Erfindung erfolgt eine Tiefpassfilterung der drei Signale.

Diese Ausführungsform bietet den Vorteil, dass hochfrequente Erschütterungen zu keinen Verfälschungen der Aufprallstärke führen können. Da nicht zwangsweise eine Aufprallstärke in der Nähe von Beschleunigungen messenden Sensoren ermittelt werden soll, sind tiefere Frequenzen besser für eine zuverlässige Messung geeignet. Wird das Verfahren beispielsweise in einer separaten Vorrichtung ausgeführt, welche in einem Fahrzeug angebracht ist und die Aufprallstärke auf das Fahrzeug (nicht die Vorrichtung) ermitteln soll, so würden leichte Schläge mit harten Gegenständen auf die Vorrichtung, sehr hohe Beschleunigungspeaks verursachen. Um diese Störquelle zu kontrollieren, können entsprechende Beschleunigungspeaks herausgefiltert werden.

In einer vorteilhaften Ausführungsform der Erfindung erfolgt die Ermittlung des Integralwertes kontinuierlich.

Diese Ausführungsform bietet den Vorteil, dass keine Totzeiten entstehen, in denen keine Messung durchgeführt wird und ein möglicher Aufprall verpasst werden könnte. Da die Abtastung digitalisiert und zeitdiskret erfolgt, bezieht sich kontinuierlich hierbei auf die kleinstmögliche Abtastung. Die Ermittlung des Integralwertes erfolgt somit quasi zeitdiskret kontinuierlich.

In einer vorteilhaften Ausführungsform der Erfindung erfolgt ein Vergleich des Integralwertes mit einem vordefinierten Schwellenwert.

Diese Ausführungsform bietet den Vorteil, dass eine exaktere Bestimmung der Aufprallstärke möglich ist und es zu keinen Fehlauslösungen kommt.

In einer vorteilhaften Ausführungsform der Erfindung erfolgt eine Ansteuerung einer Sendeeinrichtung zur Übermittlung des eine Aufprallstärke repräsentierenden Signals an eine externe Empfangseinrichtung und/oder ein mobiles Endgerät.

Diese Ausführungsform bietet den Vorteil, dass das eine Aufprallstärke repräsentierende Signal an einen sich von dem Ort des Aufpralls unterscheidenden Ort empfangbar und auswertbar ist. Somit kann ein Aufprall von einer/einem oder mehreren Personen oder Geräten gleichzeitig empfangen werden, wobei sich die Personen oder Geräte an beliebigen Orten befinden können. Die Übermittlung kann beispielsweise über eine Mobilfunk-, eine Radio-, Internet- oder eine Bluetoothsendeeinrichtung erfolgen.

Zudem wird ein Computerprogramm beansprucht, welches eingerichtet ist, alle Schritte des offenbarten Verfahrens. Des Weiteren wird ein Maschinenlesbares Speichermedium beansprucht, auf welchem das Computerprogramm gespeichert ist.

Darüber hinaus wird eine elektronische Steuereinheit beansprucht, welche eingerichtet ist, alle Schritte des offenbarten Verfahrens auszuführen.

Zudem wird eine Vorrichtung, umfassend die elektronische Steuereinheit und einen triaxialen Beschleunigungssensor, mit welchem Beschleunigungen in drei unterschiedlichen Raumrichtungen erfassbar sind, beansprucht.

In einer vorteilhaften Ausführungsform der Vorrichtung, weist diese Vorrichtung zusätzlich eine Sendeinrichtung zur Übermittlung des eine Aufprallstärke repräsentierenden Signals an eine externe Empfangseinrichtung und/oder ein mobiles Endgerät auf.

In einer bevorzugten Ausführungsform der Vorrichtung sind die elektronische Steuereinheit, der triaxiale Beschleunigungssensor und die Sendeeinrichtung in einem gemeinsamen Gehäuse angeordnet.

Hierdurch ist es möglich, eine kompakte und portable Vorrichtung herzustellen, die zur Erzeugung eines eine Aufprallstärke repräsentierenden Signals eingesetzt werden kann. Die Vorrichtung kann zur Nachrüstung verwendet werden und trägt zu einer erhöhten Sicherheit für dessen Besitzer bzw. für die Insassen des Fahrzeugs bei, in welchem eine entsprechende Vorrichtung angebracht ist.

### Zeichnungen

- Figur 1: zeigt ein schematisches Verfahrensdiagramm.
- Figur 2: zeigt ein weiteres Verfahrensdiagramm.
- Figur 3: zeigt einen schematischen Aufbau der Vorrichtung.

### Ausführungsbeispiel

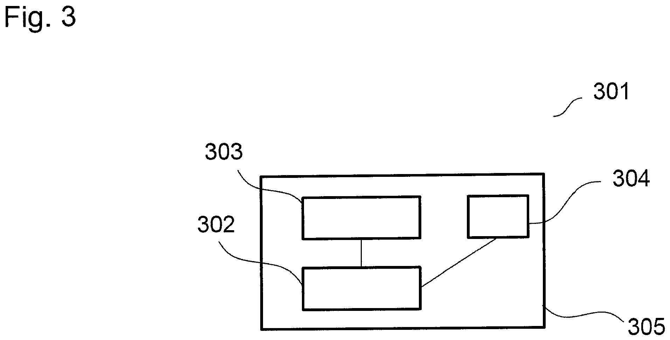

In Fig. 3 ist ein möglicher schematischer Aufbau der Vorrichtung 301 dargestellt. Die Vorrichtung 301 umfasst eine elektronische Steuereinheit 302, einen triaxialen Beschleunigungssensor 303 und eine Sendeinrichtung 304. Die Messrichtungen des Sensors 303 repräsentierende Vektoren stehen jeweils paarweise senkrecht aufeinander. Die verschiedenen Komponenten 302, 303, 304 sind in einem gemeinsamen Gehäuse 305 angeordnet. Alternativ ist es jedoch auch möglich, die Komponenten 302, 303 und 304 in unterschiedlichen Gehäusen unterzubringen.

Die Vorrichtung 301 ist für eine Verwendung in einem Fahrzeug geeignet und kann dort an verschiedenen Stellen angebracht werden. Beispielsweise im Kofferraum, im Handschuhfach oder wie in diesem Ausführungsbeispiel am Zigarettenanzünder. Vorteilhafterweise kann die Vorrichtung 301 bei einer Anbringung am Zigarettenanzünder mit einer Spannung versorgt werden. In anderen Ausführungsbeispielen wird die Spannung durch eine separate Spannungsquelle, wie bspw. eine Batterie, bereitgestellt. Die Vorrichtung 301 ist portabel und kann in jedem Fahrzeug eingesetzt werden. In diesem Ausführungsbeispiel ist die Vorrichtung 301 für den Einsatz in Kraftfahrzeugen geeignet, insbesondere in PKWs. Ein Einsatz in weiteren Fahrzeugen wie LKWs oder Motorrädern ist allerdings ebenfalls möglich.

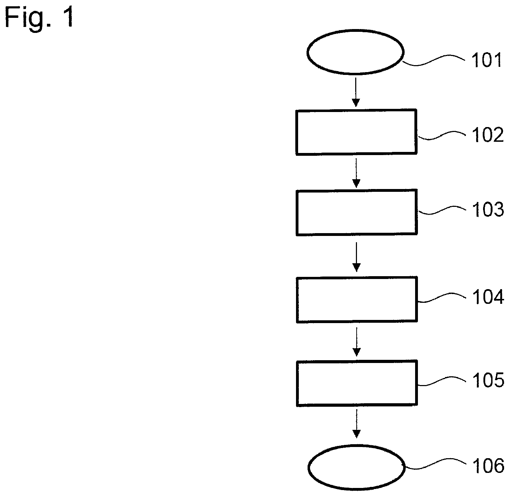

In der elektronischen Steuereinheit 302 wird das offenbarte Verfahren durchgeführt, welches schematisch in Fig. 1 dargestellt ist. Das Verfahren startet in Schritt 101.

In Schritt 102 werden drei Signale von der Steuereinheit 302 empfangen, welche von dem triaxialen Beschleunigungssensor 303 erfasst werden. Die Signale entsprechen jeweils erfassten Beschleunigungsmesswerten in drei unterschiedlichen Raumrichtungen. Hierbei stehen die Raumrichtungen repräsentierende Vektoren jeweils paarweise senkrecht aufeinander. Mittels der Vektoren und einem gemeinsamen Bezugspunkt wäre folglich ein kartesisches Koordinatensystem bildbar. Denkbar sind auch andere Messrichtungen des trixialen Beschleunigungssensors, solange die Konfiguration bekannt und wie in diesem Beispiel eine dreidimensionale Beschleunigungsmessung möglich ist.

Optional können die Signale nach dem Empfangen tiefpassgefiltert werden. Hierfür bieten sich insbesondere Filter an, bei denen der Frequenzgang nach einer festgelegten Grenzfrequenz stark abknickt und folglich eine starke Dämpfung dieser Frequenzen eintritt. In diesem Ausführungsbeispiel kommt ein Tschebyscheff-Filter zum Einsatz, bei welchem die Grenzfrequenz frei einstellbar ist. Für eine zuverlässige Erzeugung eines eine Aufprallstärke repräsentierenden Signals hat sich eine Grenzfrequenz von etwa 10 Hz als vorteilhaft erwiesen. In Abhängigkeit des angewandten Algorithmus sind jedoch auch deutlich abweichende Grenzfrequenzen denkbar, die beispielsweise zwischen 5 Hz und 400 Hz liegen können.

Alternativ zur Filterung der empfangenen Signale können auch bereits gefilterte Signale empfangen werden. Diese können beispielsweise durch eine separate Einheit vorgefiltert oder bereits von einem die Signale aussendenden Sensor gefiltert werden. Des Weiteren kann auch eine Anpassung des Algorithmus auf ungefilterte Signale erfolgen.

In Schritt 103 erfolgt die Berechnung einer richtungsunabhängigen Größe aus den drei Signalen. Für die Berechnung der richtungsunabhängigen Größe können alle mathematischen Methoden verwendet werden, mit denen einem mehrdimensionalen Datensatz ein eindimensionaler Wert zugewiesen werden kann. Beispielsweise können die einzelnen Richtungswerte addiert werden oder es kann eine gewichtete und/oder quadratische und/oder kubische Summe gebildet werden. Denkbar sind alle zweckmäßigen Algorithmen zur Berechnung eines eindimensionalen Wertes, welcher eine richtungsunabhängige eine Beschleunigung repräsentierende Größe darstellt, aus den wenigstens drei Signalen.

In diesem Ausführungsbeispiel erfolgt in Schritt 103 eine Berechnung des Betrags des aus den drei tiefpassgefilterten Signalen bildbaren Beschleunigungsvektors. Der Beschleunigungsvektor ergäbe sich durch vektorielle Addition der tiefpassgefilterten Signale in den drei Raumrichtungen. Die Bildung des Betrags erfolgt entsprechend der Vektorrechnung durch die Aufsummierung der Quadrate der Anteile in den verschiedenen Raumrichtungen und durch die anschließende Wurzelbildung der ermittelten Summe.

Um einen möglichen Fehler durch die bislang nicht berücksichtigte Erdbeschleunigung zu kompensieren sind mehrere Methoden anwendbar. Gemäß der Erfindung wird eine Anpassung der richtungsunabhängigen Größe durch eine Subtraktion eines die Erdbeschleunigung repräsentierenden Wertes von der richtungsunabhängigen Größe erfolgen. In diesem Ausführungsbeispiel wird ein die Erdbeschleunigung repräsentierender Wert von dem gebildeten Betrag abgezogen. Dieser Wert muss nicht exakt dem Betragswert der tatsächlichen Erdbeschleunigung entsprechen und kann beliebig angepasst werden.

Anstatt die Erdbeschleunigung nach der Berechnung der richtungsunabhängigen Größe zu berücksichtigen ist es auch denkbar, nicht aber gemäß der Erfindung, deren Einfluss vor Schritt 103 durchzuführen. Durch eine kontinuierliche Messung der Beschleunigung über einen zu definierenden Zeitraum, welcher mehrere Millisekunden bis mehrere Sekunden oder Minuten betragen kann, sollte sich in Abhängigkeit der Ausrichtung der Vorrichtung 301 ein Offset in wenigstens einem der empfangenen Signale einstellen. Dieser eine Erdbeschleunigung repräsentierende Offset könnte nach dessen Ermittlung vektoriell herausgerechnet, bzw. von den Signalen subtrahiert werden, wodurch ebenfalls eine Kompensation der Erdbeschleunigung möglich ist. Die Kompensation der Erdbeschleunigung findet vorzugsweise mit den gefilterten Signalen statt, kann allerdings auch mit den ungefilterten Signalen durchgeführt werden. Bei der anschließenden Berechnung der richtungsunabhängigen Größe in Schritt 103 würden in diesem Fall die kompensierten Signale einfließen.

In Schritt 104 wird ein Integralwert der richtungsunabhängigen Größe über ein gewisses Zeitfenster bestimmt. In diesem Ausführungsbeispiel wird der Betrag integriert, bei welchem der Einfluss der Erdbeschleunigung bereits berücksichtigt wurde. Integriert wird über ein gewisses Zeitfenster, welches je nach Anwendungsfall und je nach Applikation unterschiedlich lang gewählt werden kann. Für eine zuverlässige Erzeugung eines eine Aufprallstärke repräsentierenden Signals hat sich ein Zeitfenster von etwa 60 ms als vorteilhaft erwiesen. Unter einer Integration wird hierbei die Aufsummierung von diskreten Messwerten verstanden. Die genaue Anzahl der aufzusummierenden Messwerte hängt hierbei von der Integrationszeit bzw: dem Zeitfenster und der Abtastung der Messwerte ab.

Die Ermittlung des Integralwertes erfolgt in diesem Ausführungsbeispiel kontinuierlich. Aufgrund der zeitdiskreten Abtastung und Erfassung der Signale wird unter kontinuierlich in diesem Fall eine Neuberechnung des Integralwertes mit der kleinstmöglichen Abtastzeit verstanden.

In Schritt 105 erfolgt die Erzeugung eines eine Aufprallstärke repräsentierenden Signals anhand des ermittelten Integralwertes. In Abhängigkeit der Größe des Integralwertes wird somit ein Signal erzeugt, welches unterschiedliche Aufprallstärken repräsentiert. Das Signal kann beispielweise einen Crashindexwerte enthalten, welche von in einem Bereich zwischen 0 und 100 liegen. Festsetzbare Bereiche zwischen 0 und 100 können dann bspw. unterschiedlichen Crashschweren zugeordnet werden, wie Parkremplern oder leichten oder schweren Crashs.

Optional können in Abhängigkeit des erzeugten Signals unterschiedliche Aktionen ausgeführt werden. Bspw. kann eine Ansteuerung einer Sendeeinrichtung 304 zur Übermittlung des eine Aufprallstärke repräsentierenden Signals an eine externe Empfangseinrichtung und/oder ein mobiles Endgerät erfolgen. So kann einem Besitzer der Vorrichtung ein Aufprall an seinem Fahrzeug direkt mittels einer entsprechenden App auf seinem Smartphone oder per SMS auf seinem Mobiltelefon mitgeteilt werden. Denkbar ist auch eine Übermittlung des Signals an eine Notfallzentrale, falls eine entsprechend hohe Crashschwere ermittelt wird und der Einsatz von Rettungswagen notwendig sein könnte.

Das Verfahren endet in Schritt 106. Das Verfahren kann als Schleife durchgeführt werde, sodass das Verfahren nach jedem Durchlauf wieder von vorne beginnt.

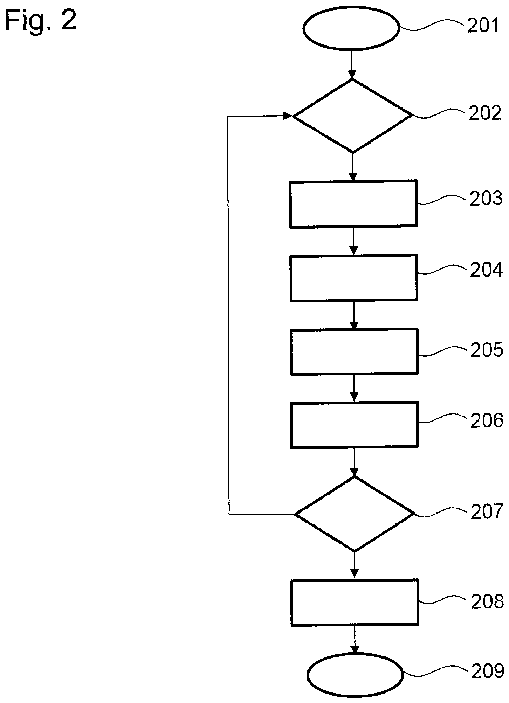

In Fig. 2 ist ein weiteres Verfahrensdiagramm abgebildet, welches in der elektronischen Steuereinheit 302 ausgeführt werden könnte. Das Verfahren startet in Schritt 201.

Schritt 202 entspricht Schritt 102, in welchem drei Signale von der Steuereinheit 302 empfangen werden, welche von dem triaxialen Beschleunigungssensor 303 erfasst werden.

In Schritt 203 erfolgt eine Tiefpassfilterung der drei Signale mittels eines parametrierbaren Tschebyscheff-Filters, dessen Grenzfrequenz auf 10 Hz festgesetzt wird.

In Schritt 204 erfolgt eine Betragsberechnung, des sich aus den drei tiefpassgefilterten Signalen ergebenden Beschleunigungsvektors. Die drei tiefpassgefilterten Signale repräsentieren jeweils von der Zeit abhängige Beschleunigungen in verschiedene Raumrichtungen. Durch vektorielle Addition der drei Signale ergibt sich ein von der Zeit abhängiger Beschleunigungsvektor. Von diesem wird der Betrag mittels quadratischer Summation der einzelnen Signale und anschließendem Radizieren der Summe gebildet.

Von diesem berechneten Betragswert wird anschließend in Schritt 205 ein die Erdbeschleunigung repräsentierender Wert abgezogen, der beispielsweise 1 g entsprechen kann.

Von dem so entstehenden Betrag wird in Schritt 206 ein Fensterintegral gebildet. Dieses wird kontinuierlich berechnet. Da die Abtastung der Beschleunigung allerdings zeitdiskret erfolgt, findet die Bildung des Fensterintegrals quasikontinuierlich statt. Die Abtastung erfolgt mit etwa 2 ms, sodass auch alle 2 ms ein neues Fensterintegral gebildet wird. Ein sinnvolles Zeitfenster ist bspw. 60 ms, sodass für die Bildung des Fensterintegrals jeweils 30 Werte addiert werden. Für das jeweils nächste Fensterintegral wird der aktuelle Messwert in die Berechnung aufgenommen und der älteste Messwert aus dem letzten Fensterintegral wird nicht mehr berücksichtigt. In diesem Ausführungsbeispiel erfolgt die quasi kontinuierliche Fensterintegralbildung durch das wiederholte Ausführen des Verfahrens. Pro Durchlauf wird somit genau ein Fensterintegral gebildet.

In Schritt 207 wird das ermittelte Fensterintegral mit einer zuvor festgelegten Schwelle verglichen. Diese kann bspw. eine Rauschschwelle sein, bis zu welcher kein besonderer Vorfall vermutet wird und folglich kein Aufprall vorliegt. Unterschreitet das aktuell berechnete Fensterintegral diese Rauschschwelle, so springt das Verfahren zurück zu Schritt 202, in welchem erneut die Messwerte empfangen werden.

Wird die Rauschschwelle von dem ermittelten Fensterintegral überschritten, erfolgt in Schritt 208 die Berechnung eines Crashindex. Dieser Crashindex setzt sich aus einem kalibrierbaren Skalierungsfaktor und der Subtraktion aus Fensterintegral und einem Schwellenwert zusammen. Der Schwellenwert entspricht in diesem Ausführungsbeispiel der Rauschschwelle. Der Skalierungsfaktor wird beispielsweise auf 1 gesetzt und mit der Differenz aus Fensterintegral und Schwellenwert multipliziert. Entsprechend frei definierbaren Crashschweregrenzen, welche in Crashindexwerten von 0 bis 100 angegeben werden, kann zwischen Parkremplern und schweren Unfällen unterschieden werden.

In Abhängigkeit des berechneten Crashindex kann eine entsprechende Ansteuerung einer Sendeeinrichtung 304 zur Übermittlung des Signals an eine externe Empfangseinrichtung und/oder ein mobiles Endgerät erfolgen.

Das Verfahren endet in Schritt 209.

## Patentansprüche

1. Verfahren zur Erzeugung eines eine Aufprallstärke repräsentierenden Signals mit den Schritten:
- Empfangen (102) von wenigstens drei Signalen, welche jeweils Beschleunigungen in unterschiedliche Raumrichtungen repräsentieren;
- Berechnen (103) einer richtungsunabhängigen Größe aus den drei Signalen;
- Ermitteln (104) eines Integralwertes der richtungsunabhängigen Größe über ein Zeitfenster;
- Erzeugung (105) eines eine Aufprallstärke repräsentierenden Signals anhand des ermittelten Integralwertes,
wobei eine Anpassung der richtungsunabhängigen Größe durch eine Subtraktion eines die Erdbeschleunigung repräsentierenden Wertes von der richtungsunabhängigen Größe erfolgt.

2. Verfahren nach einem der vorhergehenden Ansprüche, **dadurch gekennzeichnet, dass** eine Tiefpassfilterung der drei Signale erfolgt.

3. Verfahren nach einem der vorhergehenden Ansprüche, **dadurch gekennzeichnet, dass** die Ermittlung des Integralwertes kontinuierlich erfolgt.

4. Verfahren nach einem der vorhergehenden Ansprüche, **dadurch gekennzeichnet, dass** ein Vergleich des Integralwertes mit einem vordefinierten Schwellenwert erfolgt.

5. Verfahren nach einem der vorhergehenden Ansprüche, **dadurch gekennzeichnet, dass** eine Ansteuerung einer Sendeeinrichtung (304) zur Übermittlung des eine Aufprallstärke repräsentierenden Signals an eine externe Empfangseinrichtung und/oder ein mobiles Endgerät erfolgt.

6. Computerprogramm, welches eingerichtet ist, alle Schritte des Verfahrens nach einem der Ansprüche 1 bis 5 auszuführen.

7. Maschinenlesbares Speichermedium, auf welchem ein Computerprogramm nach Anspruch 6 gespeichert ist.

8. Elektronische Steuereinheit (302), welche eingerichtet ist, alle Schritte des Verfahrens nach einem der Ansprüche 1 bis 5 auszuführen.

9. Vorrichtung (301), umfassend eine elektronische Steuereinheit (302) nach Anspruch 8 und einen triaxialen Beschleunigungssensor (303), mit welchem Beschleunigungen in drei unterschiedlichen Raumrichtungen erfassbar sind.

10. Vorrichtung (301) nach Anspruch 9, **dadurch gekennzeichnet, dass** die Vorrichtung zusätzlich eine Sendeinrichtung (304) zur Übermittlung des eine Aufprallstärke repräsentierenden Signals an eine externe Empfangseinrichtung und/oder ein mobiles Endgerät aufweist.

11. Vorrichtung (301) nach Anspruch 10, **dadurch gekennzeichnet, dass** die elektronische Steuereinheit (302), der triaxiale Beschleunigungssensor (303) und die Sendeeinrichtung (304) in einem gemeinsamen Gehäuse (305) angeordnet sind.

12. Vorrichtung (301) nach Anspruch 11, wobei die Vorrichtung (301) dazu eingerichtet ist, an einem Zigarettenanzünder eines Fahrzeugs angebracht zu werden.

## Claims

1. Method for generating a signal representing an impact intensity, having the steps of:
- receiving (102) at least three signals each representing accelerations in different spatial directions;
- calculating (103) a direction-independent variable from the three signals;
- determining (104) an integral value of the direction-independent variable over a time window;
- generating (105) a signal representing an impact intensity on the basis of the determined integral value,
wherein the direction-independent variable is adapted by subtracting a value representing the gravitational acceleration from the direction-independent variable.

2. Method according to one of the preceding claims, **characterized in that** the three signals are subjected to low-pass filtering.

3. Method according to one of the preceding claims, **characterized in that** the integral value is determined continuously.

4. Method according to one of the preceding claims, **characterized in that** the integral value is compared with a predefined threshold value.

5. Method according to one of the preceding claims, **characterized in that** a transmitting device (304) is controlled to transmit the signal representing an impact intensity to an external receiving device and/or to a mobile terminal.

6. Computer program which is set up to carry out all steps of the method according to one of Claims 1 to 5.

7. Machine-readable storage medium on which a computer program according to Claim 6 is stored.

8. Electronic control unit (302) which is set up to carry out all steps of the method according to one of Claims 1 to 5.

9. Apparatus (301) comprising an electronic control unit (302) according to Claim 8 and a triaxial acceleration sensor (303) which can be used to capture accelerations in three different spatial directions.

10. Apparatus (301) according to Claim 9, **characterized in that** the apparatus additionally has a transmitting device (304) for transmitting the signal representing an impact intensity to an external receiving device and/or to a mobile terminal.

11. Apparatus (301) according to Claim 10, **characterized in that** the electronic control unit (302), the triaxial acceleration sensor (303) and the transmitting device (304) are arranged in a common housing (305).

12. Apparatus (301) according to Claim 11, wherein the apparatus (301) is set up to be fitted to a cigarette lighter of a vehicle.

## Revendications

1. Procédé pour générer un signal représentant une intensité d'impact, comprenant les étapes consistant à :
- recevoir (102) au moins trois signaux qui représentent chacun des accélérations dans des directions spatiales différentes ;
- calculer (103) une grandeur indépendante de la direction à partir des trois signaux ;
- déterminer (104) une valeur intégrale de la grandeur indépendante de la direction dans une fenêtre temporelle ;
- générer (105) un signal représentant une intensité d'impact sur la base de la valeur intégrale déterminée,
dans lequel une adaptation de la grandeur indépendante de la direction est effectuée en soustrayant à la grandeur indépendante de la direction une valeur représentant l'accélération de la pesanteur.

2. Procédé selon l'une des revendications précédentes, **caractérisé en ce qu'**un filtrage passe-bas des trois signaux est effectué.

3. Procédé selon l'une des revendications précédentes, **caractérisé en ce que** la valeur intégrale est déterminée en continu.

4. Procédé selon l'une des revendications précédentes, **caractérisé en ce qu'**une comparaison de la valeur intégrale avec une valeur de seuil prédéfinie est effectuée.

5. Procédé selon l'une des revendications précédentes, **caractérisé en ce qu'**une commande d'un dispositif d'émission (304) est effectuée pour transmettre le signal représentant une intensité d'impact à un dispositif de réception externe et/ou à un terminal mobile.

6. Programme d'ordinateur, qui est conçu pour mettre en œuvre toutes les étapes du procédé selon l'une des revendications 1 à 5.

7. Support de stockage lisible par machine sur lequel est stocké un programme d'ordinateur selon la revendication 6.

8. Unité de commande électronique (302) conçue pour mettre en œuvre toutes les étapes du procédé selon l'une des revendications 1 à 5.

9. Dispositif (301), comprenant une unité de commande électronique (302) selon la revendication 8 et un capteur d'accélération triaxial (303) au moyen duquel des accélérations dans trois directions spatiales différentes peuvent être détectées.

10. Dispositif (301) selon la revendication 9, **caractérisé en ce que** le dispositif comporte en outre un dispositif d'émission (304) destiné à transmettre le signal représentant une intensité d'impact à un dispositif de réception externe et/ou à un terminal mobile.

11. Dispositif (301) selon la revendication 10, **caractérisé en ce que** l'unité de commande électronique (302), le capteur d'accélération triaxial (303) et le dispositif d'émission (304) sont disposés dans un boîtier commun (305).

12. Dispositif (301) selon la revendication 11, dans lequel le dispositif (301) est conçu pour être monté sur un allume-cigare d'un véhicule.
